# EUROPÄISCHE PATENTSCHRIFT

(11) **EP 2 018 300 B1**
(45) Veröffentlichungstag und Bekanntmachung des Hinweises auf die Patenterteilung: **01.12.2010**
(21) Anmeldenummer: 07728416.4
(22) Anmeldetag: 23.04.2007
(51) Int. Cl.: B60R 21/207

(54) **GASSACKANORDNUNG FÜR EINEN KRAFTFAHRZEUGSITZ**
AIRBAG ARRANGEMENT FOR A MOTOR VEHICLE SEAT
INSTALLATION DE SAC DE GAZ POUR SIEGE DE VEHICULE

(30) Priorität: 19.05.2006 DE 202006008373 U
(43) Veröffentlichungstag der Anmeldung: 28.01.2009
(73) Patentinhaber: Takata-Petri AG, 63743 Aschaffenburg (DE)
(72) Erfinder: GUTMANN, Ralf, 89075 Ulm (DE); SÖLL, Reiner, 89180 Berghülen (DE); HEUSCHMID, Rainer, 89075 Ulm (DE); GETZ, Robert, 89081 Ulm (DE); POLTE, Matthias, 86441 Zusmarshausen (DE)
(74) Vertreter: Baumgärtel, Gunnar
(86) Internationale Anmeldenummer: PCT/EP2007/053960
(87) Internationale Veröffentlichungsnummer: WO 2007/134931

(56) Entgegenhaltungen:
- DE-A1- 10 307 480
- JP-A- 9 123 864
- US-A- 5 967 603
- US-B1- 6 364 347

## Beschreibung

Die Erfindung betrifft eine Gassackanordnung für ein Kraftfahrzeug nach dem Oberbegriff des Anspruchs 1.

Eine derartige Gassackanordnung umfasst ein Rahmenteil, als ein Teil eines Grundkörpers eines Kraftfahrzeugsitzes, sowie ein am Rahmenteil befestigtes Gassackpaket, das zumindest einen zusammengelegten Gassack umfasst, der zum Schutz einer Person mit Gas aufblasbar ist.

Bei dem Rahmenteil kann es sich beispielsweise um einen im Wesentlichen entlang der vertikalen Fahrzeugachse erstreckten Abschnitt eines Lehnenrahmens einer Lehne eines Kraftfahrzeugsitzes handeln. Der Gassack ist in diesem Fall dazu ausgelegt, sich im Gefahrenfalle zwischen einem den Kraftfahrzeugsitz belegenden Fahrzeuginsassen und einer seitlichen Karosserie des Kraftfahrzeuges zu entfalten.

Bei Gassackanordnungen der eingangs erwähnten Art, wie z.B. in der DE 10307480 A1 besteht dass Problem, dass der zur Verfügung stehende Bauraum für das Gassackpaket begrenzt ist.

Der Erfindung liegt daher das Problem zugrunde, eine Gassackanordnung der vorgenannten Art bereitzustellen, bei der das Gassackpaket einen möglichst geringen Bauraum einnimmt.

Dieses Problem wird durch eine Gassackanordnung mit den Merkmalen des Anspruchs 1 gelöst.

Danach ist mindestens ein zusätzliches Spannelement vorgesehen, das dazu eingerichtet und vorgesehen ist, das Gassackpaket an das Rahmenteil anzudrücken.

Hierdurch wird das erfindungsgemäße Problem mit Vorteil gelöst, da das Gassackpaket durch das Spannelement komprimiert wird, wodurch der durch das Gassackpaket eingenommen Bauraum verkleinert wird.

Weiterhin wird hierdurch das Gassackpaket am Rahmenteil derart fixiert, dass die einzelnen Falten des zusammengelegten Gassackes des Gassackpakets nicht gegeneinander verrutschen können, was die Reproduzierbarkeit des Entfaltungsvorganges beim Aufblasen des Gassackes verbessert.

Bevorzugt ist das Spannelement zumindest teilweise flexibel ausgebildet, und zwar insbesondere aus einem Gewebe, Gewirk oder einem folienartigen Material. Hierdurch kann sich das Spannelement vorteilhaft eng an das Gassackpaket anschmiegen, so dass es nur einen geringen Anteil des insgesamt zur Verfügung stehenden Bauraums einnimmt. Alternativ hierzu kann das Spannelement starr ausgebildet sein, insbesondere stab- oder bügelförmig.

In einer Variante der Erfindung umgreift das Spannelement das Gassackpaket im Querschnitt zumindest um 180°, so dass das Gassackpaket sicher mittels des Spannelementes am Rahmenteil fixiert werden kann. In einem anderen Ausführungsbeispiel umgreift das Spannelement das Gassackpaket und das Rahmenteil im Querschnitt um zumindest 360°.

Vorzugsweise weist das Gassackpaket eine dem Rahmenteil abgewandte erste Außenseite auf, die bevorzugt vom Spannelement vollständig überdeckt wird. Hierdurch kann das Gassackpaket mit Vorteil großflächig an das Rahmenteil angepresst bzw. mit diesem verspannt werden.

In einer Ausführungsform der Erfindung umfasst das Spannelement einen ersten und einen zweiten Endbereich, mittels der das Spannelement am Rahmenteil unter Vorspannung festgelegt ist, so dass das Gassackpaket gegen das Rahmenteil gepresst wird.

Die beiden Endbereiche sind bevorzugt über einen zur Anlage an der Außenseite des Gassackpakets vorgesehenen Anlagebereich des Spannelementes miteinander verbunden, der derart gegen das Gassackpaket vorgespannt ist, dass er das Gassackpaket gegen das Rahmenteil drückt.

In einem Ausführungsbeispiel der Erfindung erstreckt sich das Rahmenteil entlang einer Erstreckungsrichtung längs. Bevorzugt weist das Rahmenteil einen ersten und einen zweiten entlang der Erstreckungsrichtung verlaufenden Randbereich auf, die quer zur Erstreckungsrichtung einander gegenüberliegen, wobei vorzugsweise der erste und / oder der zweite Randbereich von einer dem Gassackpaket abgewandten Innenseite des Rahmenteils abstehen, d.h., vom Gassackpaket weg gekrümmt sind.

In einer Variante der Erfindung sind der erste und / oder der zweite Endbereich zum Festlegen des Spannelementes kraftschlüssig mit dem Rahmenteil verbunden. Zusätzlich oder alternativ hierzu ist der erste und / oder der zweite Endbereich bevorzugt formschlüssig mit dem Rahmenteil verbunden. Die vorstehenden Verbindungen können weiterhin zerstörungsfrei lösbar ausgebildet sein, was den Montageaufwand (z.B. im Servicefall) vorteilhaft reduziert. Das Spannelement wird dabei mittels der Endbereiche unter Vorspannung am Rahmenteil befestigt, so dass sich das Spannelement eng an das Gassackpaket anlegt und dieses gegen das Rahmenteil presst.

Bevorzugt ist zumindest einer der Endbereiche dazu eingerichtet und vorgesehen, zum Festlegen des Spannelementes am Rahmenteil einen der beiden Randbereiche des Rahmenteils zu umgreifen. In einem Ausführungsbeispiel ist der zumindest eine Endbereich zum Umgreifen des einen Randbereiches als längs erstreckte, im Querschnitt hakenförmige Leiste ausgebildet, die sich bevorzugt entlang der Erstreckungsrichtung längs des gesamten Gassackpakets erstreckt. Hierdurch kann das Gassackpaket über seine gesamte Länge entlang der Erstreckungsrichtung sicher mit dem Rahmenteil verspannt werden, wobei entlang der Erstreckungsrichtung eine gleichmäßige Kompression des Gassackpaketes sichergestellt ist. In einem anderen Ausführungsbeispiel ist zumindest einer der Endbereiche des Spannelementes zum Umgreifen eines Randbereiches des Rahmenteils durch entlang der Erstreckungsrichtung zueinander beabstandete, im Querschnitt hakenförmige Leistenabschnitte gebildet. Hierdurch liegen entlang der Erstreckungsrichtung Abschnitte des einen Randbereiches frei, an denen weitere Komponenten festgelegt werden können (z.B. ein Bezug einer Lehne des Kraftfahrzeugsitzes).

Weiterhin ist vorzugsweise einer der beiden Endbereiche des Spannelementes zum Festlegen des Spannelementes am Rahmenelement als Klipselement ausgebildet. Hierbei ist dieser Endbereich vorzugsweise dazu ausgebildet, eine Durchgangsöffnung des Rahmenteils zu hintergreifen. Eine derartige Durchgangsöffnung ist vorzugsweise an einem der Randbereiche des Rahmenteils ausgebildet. Zum Festlegen am Rahmenteil kann das Spannelement beispielsweise zunächst über das Klipselement am ersten Randbereich des Rahmenteils in einer Durchgangsöffnung festgelegt werden und sodann, das Gassackpaket im Querschnitt umgreifend, am (gegenüberliegenden) zweiten Randbereich des Rahmenteils unter Vorspannung eingehängt werden, wobei der betreffende Endbereich des Spannelementes den zweiten Randbereich im Querschnitt umgreift.

In einer anderen Variante der Erfindung sind der erste und der zweite Endbereich zum Festlegen des Spannelementes am Rahmenteil kraftschlüssig und / oder formschlüssig miteinander verbunden. Hierbei umgreift das Spannelement das Gassackpaket sowie das Rahmenteil unter Vorspannung im Querschnitt um zumindest 360° und drückt dabei das Gassackpaket gegen das Rahmenteil. Die Zugkräfte, die hierbei auf die miteinander zu verbindenden Endbereiche des Spannelementes wirken, sind einander entgegengesetzt. In einem Ausführungsbeispiel sind die Endbereiche daher hakenförmig ausgebildet, so dass sie zum Ausbilden einer Verbindung zwischen den beiden Endbereichen ineinander eingreifen können.

In einem alternativen Ausführungsbeispiel ist vorgesehen, dass der erste und der zweite Endbereich flächig ausgebildet sind und über eine flächig ausgebildete Verbindung, insbesondere einen Klettverschluss, miteinander verbunden sind. Hierzu kann an einem der beiden Endbereiche ein Hakenbereich eines Klettverschlusses vorgesehen sein, der in einen am anderen Endbereich vorgesehenen Ösenbereich des Klettverschlusses eingreifen kann. Natürlich können die beiden Endbereiche auch miteinander verklebt oder verschweißt sein.

In einer Variante der Erfindung ist vorgesehen, dass das Rahmenteil durch einen im Wesentlichen entlang der vertikalen Fahrzeugachse erstreckten Abschnitt eines Lehnenrahmens einer Lehne des Kraftfahrzeugsitzes gebildet ist. In der Regel ist eine Lehne eines Kraftfahrzeugsitzes um eine parallel zur Fahrzeugquerachse verlaufende Achse verschwenkbar. Hierbei verändert sich natürlich auch die Orientierung des Lehnenrahmens bezüglich der vertikalen Fahrzeugachse, d.h., die Orientierung des Abschnittes des Lehnenrahmens im Raum weist in der Regel auch eine Komponente entlang der Fahrzeuglängsachse auf.

Damit sich der Gassack beim Aufblasen durch das Spannelement hindurch im Innenraum des Kraftfahrzeuges entfalten kann, weist der Anlagebereich des Spannelementes einen ersten öffenbaren Bereich auf, der dazu eingerichtet und vorgesehen ist, sich zu öffnen, wenn der Gassack beim Aufblasen gegen diesen Bereich drückt. Bei einem derartigen öffenbaren Bereich kann es sich beispielsweise um eine Schwachstelle des Materials des Spannelementes handeln, die beispielsweise linienförmig ausgebildet sein kann und beispielsweise durch eine Perforation oder eine Reißnaht gebildet sein kann. Bei einem an einen Lehnenrahmen festgelegten Gassackpaket, das entlang der Fahrzeugquerachse zwischen dem Lehnenrahmen und einer seitlichen Karosserie des Kraftfahrzeuges angeordnet ist, kann der erste öffenbare Bereich beispielsweise der Kraftfahrzeugfront zugewandt sein, so dass sich der Gassack entlang der Fahrzeuglängsachse zwischen einem den Kraftfahrzeugsitz belegenden Fahrzeuginsassen und der seitlichen Fahrzeugkarosserie entfalten kann.

In einer weiteren Variante der Erfindung weist das Spannelement eine zwischen dem Gassackpaket und dem Rahmenteil erstreckte Zwischenlage auf, die zusammen mit dem Anlagebereich des Spannelementes das Gassackpaket im Querschnitt um 360° umgreift. Die Zwischenlage bildet hierbei mit dem Anlagebereich eine Tasche zur Aufnahme des Gassackpakets aus, so dass das Gassackpaket bei der Montage an das Rahmenteil nicht separat gehandhabt werden muss. Vorzugsweise ist die Zwischenlage flexibel ausgebildet und aus einem Gewebe, Gewirk oder einem folienartigen Material gefertigt.

Nach einer Ausführungsform der erfindungsgemäßen Gassackanordnung ist ein Polster vorgesehen, das das Rahmenteil und das Gassackpaket im Querschnitt zumindest teilweise umgibt, wobei bevorzugt das Polster einen entlang des Gassackpakets erstreckten Spalt aufweist, mit einer ersten und einer zweiten entlang des Gassackpaketes verlaufenden Seite, die einander gegenüberliegen und an denen entlang sich der Gassack beim Aufblasen durch den Spalt hindurch in den Innenraum des Kraftfahrzeuges entfalten kann. Hierbei kann das Polster derart flexibel ausgebildet sein, dass sich der Spalt beim Aufblasen des Gassackes vergrößern kann. Bevorzugt ist das Polster von einem Bezug umgeben, der an einer dem Gassackpaket und dem Rahmenteil abgewandten Außenseite des Polsters anliegt. Bei dem Bezug kann es sich um ein textiles Flächengebilde oder ein folienartiges Material handeln. Ferner kann der Bezug aus einem Leder oder einem vergleichbaren Material ausgebildet sein.

In einem bevorzugten Ausführungsbeispiel der Erfindung ist ein vom Anlagebereich des Spannelementes abgehendes flexibles erstes Element vorgesehen, das den Anlagebereich mit dem Bezug verbindet, wobei das erste Element die erste Seite des Spaltes zum Schutz des Polsters vor dem sich entfaltenden Gassack bedeckt. Weiterhin ist vorzugsweise ein vom Anlagebereich abgehendes flexibles zweites Element vorgesehen, das ebenfalls den Anlagebereich mit dem Bezug verbindet, wobei das zweite Element die zweite Seite des Spaltes zum Schutz des Polsters vor dem sich entfaltenden Gassack bedeckt.

Vorzugsweise weist der Bezug einen zweiten öffenbaren Bereich auf, der dazu eingerichtet und vorgesehen ist, sich zu öffnen, wenn der Gassack beim Aufblasen gegen den zweiten öffenbaren Bereich drückt, so dass sich der Gassack beim Aufblasen durch den geöffneten zweiten Bereich hindurch entfalten kann. Dieser kann, wie der erste öffenbare Bereich, der Kraftfahrzeugfront zugewandt sein.

Bevorzugt ist das erste und das zweite Element am zweiten öffenbaren Bereich des Bezugs mit dem Bezug verbunden, so dass sich der beim Aufblasen in den Spalt entfaltende Gassack entlang des ersten und des zweiten flexiblen Elementes gegen den zweiten öffenbaren Bereich des Bezugs geführt wird (Schusskanal).

In einer alternativen Variante der Erfindung ist vorgesehen, dass das Polster das Rahmenteil im Querschnitt einschließt, wobei das Polster vorzugsweise einen dritten öffenbaren Bereich aufweist, der dazu ausgebildet ist, sich zu öffnen, wenn der Gassack beim Aufblasen gegen den dritten öffenbaren Bereich drückt.

Zum Aufblasen des Gassackes ist ein Gasgenerator vorgesehen, der die zum Aufblasen des Gassackes benötigten Gase freisetzt. Vorzugsweise weist das Gassackpaket eine den Gassack umgebene flexible Hülle auf, die vorzugsweise auch den Gasgenerator umgibt.

In einem Ausführungsbeispiel ist vorgesehen, dass die Hülle mit dem Gassack verbunden ist, und zwar insbesondere einstückig. Bevorzugt weist die Hülle einen vierten öffenbaren Bereich auf, der dazu eingerichtet und vorgesehen ist, sich zu öffnen, wenn der Gassack beim Aufblasen gegen den vierten öffenbaren Bereich drückt, so dass sich der Gassack beim Aufblasen durch den geöffneten vierten öffenbaren Bereich hindurch entfalten kann.

Ein weiterer Gedanke der Erfindung ist die Bereitstellung einer Lehne eines Kraftfahrzeugsitzes, mit einem Rahmenteil und einem daran nach der erfindungsgemäßen Gassackanordnung angeordneten Gassack.

Die dargestellten Merkmale und Vorteile der Erfindung sollen anhand der nachfolgenden
Figurenbeschreibungen von Ausführungsbeispielen verdeutlicht werden. Es zeigen:
   - Figur 1: eine schematische, ausschnitthafte Schnittansicht einer Gassackanordnung, mit einem an ein Rahmenteil eines Kraftfahrzeugsitzes befestigten Gassackpaket, und einem Spannelement, zum Verspannen des Gassackpaketes mit dem Rahmenteil;
   - Figur 2: eine schematische, ausschnitthafte Schnittansicht einer Abwandlung der in der Figur 1 dargestellten Gassackanordnung, bei der das Spannelement eine zusätzliche, zwischen dem Rahmenteil und dem Gassackpaket verlaufende Zwischenlage aufweist;
   - Figur 3: eine schematische, ausschnitthafte Schnittansicht der in der Figur 1 gezeigten Gassackanordnung, mit einem Polster, das das Gassackpaket und das Rahmenteil im Querschnitt umgibt, wobei das Polster mit einem Bezug bezogen ist, und mit einem ersten und einem zweiten flexiblen Element, über die das Spannelement mit dem Bezug verbunden ist;
   - Figur 4: eine schematische, ausschnitthafte Schnittansicht einer Abwandlung der in der Figur 3 gezeigten Gassackanordnung, bei der das Spannelement eine zusätzliche, zwischen dem Rahmenteil und dem Gassackpaket verlaufende Zwischenlage aufweist;
   - Figur 5: eine schematische, ausschnitthafte Schnittansicht einer Abwandlung der in der Figur 1 gezeigten Gassackanordnung, bei der das Spannelement über zwei unterschiedlich ausgebildete Befestigungsmittel am Rahmenteil festgelegt ist;
   - Figur 6: eine schematische, ausschnitthafte Schnittansicht einer Abwandlung der in der Figur 3 gezeigten Gassackanordnung, bei der das Spannelement über zwei unterschiedlich ausgebildete Befestigungsmittel am Rahmenteil festgelegt ist;
   - Figur 7: eine perspektivische Ansicht eines Lehnenrahmens für einen Kraftfahrzeugsitz, mit einem daran befestigten Gassackpaket, das mittels einer Mehrzahl an Spannelementen mit dem Lehnenrahmen verspannt ist;
   - Figur 8: eine schematische, ausschnitthafte Schnittansicht einer Abwandlung der in der Figur 6 gezeigten Gassackanordnung, bei der das Spannelement eine zusätzliche, zwischen dem Rahmenteil und dem Gassackpaket verlaufende Zwischenlage aufweist;
   - Figur 9: eine schematische, ausschnitthafte Schnittansicht einer Abwandlung der in der Figur 1 gezeigten Gassackanordnung, bei der das Spannelement das Gassackpaket um 360° umgreift;
   - Figur 9A: eine schematische, ausschnitthafte Schnittansicht einer Abwandlung der in der Figur 9 gezeigten Verbindung der Endbereiche des Spannelementes;
   - Figur 10: eine schematische, ausschnitthafte Schnittansicht einer Abwandlung der in der Figur 9 gezeigten Gassackanordnung, bei der das Spannelement eine zusätzliche, zwischen dem Rahmenteil und dem Gassackpaket verlaufende Zwischenlage aufweist;
   - Figur 11: eine schematische, ausschnitthafte Schnittansicht einer Abwandlung der in der Figur 3 gezeigten Gassackanordnung, bei der das Spannelement das Gassackpaket um 360° umgreift;
   - Figur 12: eine perspektivische Ansicht eines Rahmenteils eines Lehnenrahmens, mit einem daran befestigten Gassackpaket, das mittels eines Spannelementes mit dem Rahmenteil verspannt ist, wobei das Spanneelement mit entlang des Rahmenteils längs erstreckten und im Querschnitt hakenförmigen Endbereichen an Randbereichen des Rahmenteils eingehängt ist; und
   - Figur 13: eine perspektivische Ansicht einer Abwandlung des in der Figur 12 gezeigten Spannelementes, wobei die Endbereiche entlang der Randbereiche des Rahmenteils verlaufende Aussparungen aufweisen.

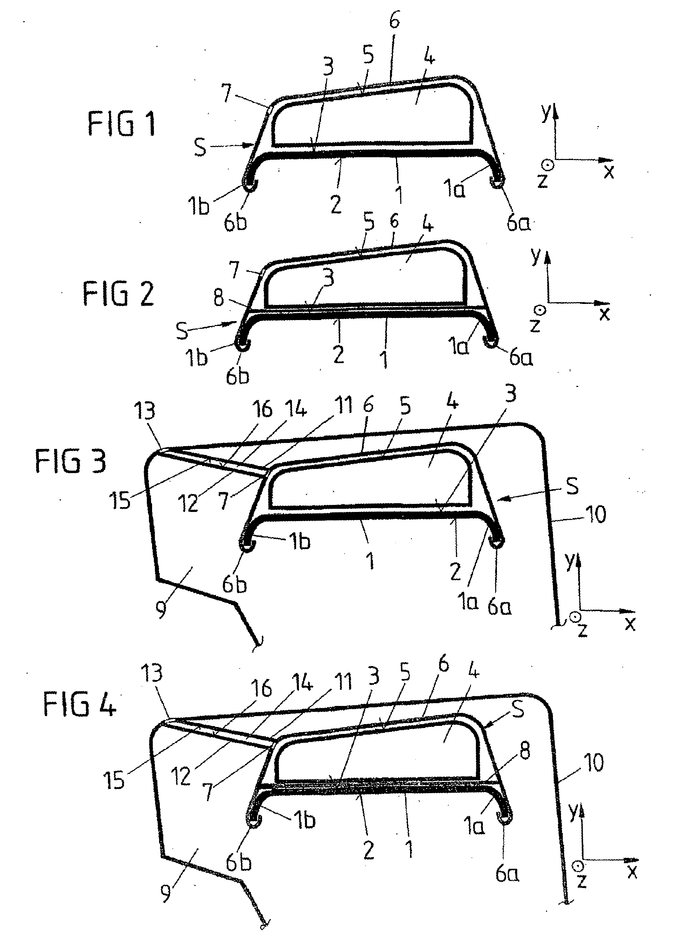

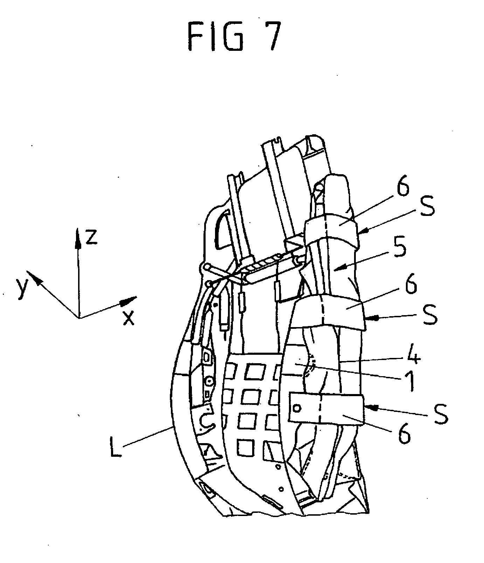

Figur 1 zeigt im Zusammenhang mit Figur 3 eine schematische, ausschnitthafte Draufsicht (die vertikale Fahrzeugachse z steht senkrecht auf der Papierebene) auf ein Rahmenteil 1 in Form eines im Wesentlichen entlang der vertikalen Fahrzeugachse z erstreckten Abschnitts eines Lehnenrahmens L eines Kraftfahrzeugsitzes (vgl. Figur 7), mit einer dem Innenraum des Kraftfahrzeuges entlang der Fahrzeugquerachse y zugewandten Innenseite 2 und einer der Innenseite 2 abgewandten Außenseite 3 des Rahmenteils 1. Aufgrund der Verschwenkbarkeit des Lehnenrahmens L bzw. der Lehne eines Kraftfahrzeugsitzes um eine parallel zur Fahrzeugquerachse y verlaufende Achse, erstreckt sich das Rahmenteil 1 entlang einer Erstreckungsrichtung, die sowohl eine Komponente entlang der Fahrzeugquerachse x als auch entlang der vertikalen Fahrzeugachse z aufweisen kann. Vorliegend soll sich das Rahmenteil 2 entlang der vertikalen Fahrzeugachse z längs erstrecken.

An der Außenseite 3 des Rahmenteils 2 ist ein entlang der vertikalen Fahrzeugachse z längs erstreckt ausgebildetes Gassackpaket 4 befestigt, das zumindest einen mit Gas aufblasbaren, zusammengelegten Gassack umfasst, der sich beim Aufblasen im Wesentlichen entlang einer Ebene entfaltet, die durch eine parallel zur Fahrzeuglängsachse x verlaufende Fahrzeugachse und eine parallel zur vertikalen Fahrzeugachse z verlaufende Fahrzeugachse aufgespannt wird. Das Gassackpaket 4 kann eine äußere flexible Hülle zum Schutz des Gassackes (und weiterer Komponenten) aufweisen, in der der Gassack vor dem Aufblasen in seinem gefalteten Zustand angeordnet ist. Ferner kann die Hülle einen zum Aufblasen des Gassackes dienenden Gasgenerator umgeben und kann insbesondere mit dem Gassack selbst verbunden sein, insbesondere einstückig.

Ein derartiger Gassack für den Seitenschutz kann mehrere Kammern aufweisen (z.B. eine Thorax- und eine Kopfkammer zum Schutz des Brustbereiches bzw. des Kopfes einer den Kraftfahrzeugsitz belegenden Person). Zum Verteilen des Gasstromes in die einzelnen Kammern oder Bereiche des Gassackes kann ein Gasstromverteiler vorgesehen sein, der insbesondere aus einem flexiblen Material, beispielsweise aus einem Gewebe, bestehen kann. Bei einem zylinderförmigen Gasgenerator beispielsweise kann der Gasstromverteiler im Wesentlichen als eine zylindrische Hülle ausgebildet sein, die axial auf den Gasgenerator aufgeschoben ist und die am Mantel des Gasgenerators ausgebildeten Gasauslässe des Gasgenerators überdeckt, die zum Ausströmen durch den Gasgenerator freisetzbarer Gase dienen. Hierdurch wird der Gasstrom aufgeteilt und das Gas kann in zwei entgegengesetzte, parallel zur Zylinderachse des Gasgenerators orientierte Richtungen strömen, um beispielsweise einer Kopf- oder einer Thoraxkammer des Gassackes zugeführt zu werden.

Sofern der Gassack des Gassackpaketes 4 von einer äußeren Hülle umgeben ist, ist an der Hülle ein als vierter öffenbaren Bereich bezeichneter öffenbarer Bereich vorgesehen, der dazu ausgebildet ist, sich zu öffnen, wenn der Gassack beim Aufblasen entlang der Fahrzeuglängsachse x gegen den vierten öffenbaren Bereich drückt, so dass sich der Gassack entlang der Fahrzeuglängsachse x beim Aufblasen durch den geöffneten vierten öffenbaren Bereich hindurch in den Innenraum des Kraftfahrzeuges entfalten kann. Bei einem derartigen öffenbaren Bereich kann es sich beispielsweise um eine Reißnaht oder einer Perforation der äußeren Hülle des Gassackpakets 4 handeln.

Um das Gassackpaket 4 zu kompaktifizieren, so dass es entlang der Fahrzeugquerachse y weniger Bauraum einnimmt, ist ein Spannelement S mit einem Anlagebereich 6 vorgesehen, der an einer der Außenseite 3 des Rahmenteils 1 abgewandten Außenseite 5 des Gassackpakets 4 anliegt und diese flächig überdeckt. Damit der Anlagebereich 6 des Spannelementes S das Gassackpaket 4 entlang der Fahrzeugquerachse y gegen das Rahmenteil 1, und zwar gegen dessen Außenseite 3 drücken kann, ist er entlang der Fahrzeuglängsachse x zu beiden Seiten des Gassackpaketes 4 über einen ersten und einen zweiten Endbereich 6a, 6b des Spannelementes S, die über den Anlagebereich 6 miteinander verbunden sind, am Rahmenteil 1 festgelegt und dabei gegen das Gassackpaket 4 vorgespannt. Der vorgespannte Anlagebereich 6 umgreift also das Gassackpaket 4 im Querschnitt um zumindest 180° und drückt es dabei gegen die Außenseite 3 des Rahmenteils 1.

Hierzu weist das Rahmenteil 1 einen ersten und einen zweiten entlang der vertikalen Fahrzeugachse z erstreckten Randbereich 1 a, 1b auf, die zueinander beabstandet sind und einander entlang der Fahrzeuglängsachse x gegenüberliegen. Der erste und der zweite Randbereich 1 a, 1b sind dabei zum Innenraum des Kraftfahrzeuges hin gekrümmt, so dass sie entlang der Fahrzeugquerachse y von der Innenseite 2 des Rahmenteils 1 abragen. Die beiden Endbereiche 6a, 6b des Spannelementes S sind nun im Querschnitt hakenförmig ausgebildet, so dass sie den ersten bzw. den zweiten Randbereich 1 a, 1 b umgreifen können. Hierbei ist die jeweilige Hakenöffnung entlang der Fahrzeugquerachse y der Innenseite 2 des Rahmenteils 1 zugewandt. Auf diese Weise nehmen der erste und der zweite Randbereich 1 a, 1b die Zugkräfte auf, die der vorgespannte Anlagebereich 6 auf die beiden Randbereiche 1 a, 1b des Rahmenteils 1 ausübt. Dabei drückt der Anlagebereich 6 mit einer entlang der Fahrzeugquerachse y gerichteten Kraft das Gassackpaket 4 gegen die Außenseite 3 des Rahmenteils 1.

Damit der Gassack beim Aufblasen das Spannelement S durchdringen kann, ist am Anlagebereich 6 ein als erster öffenbaren Bereich 7 bezeichneter öffenbarer Bereich vorgesehen (beispielsweise eine Reißnaht oder eine Perforation), der sich öffnet, wenn der Gassack beim Aufblasen gegen den ersten öffenbaren Bereich 7 drückt.

Dieser erste öffenbare Bereich 7 erstreckt sich entlang der vertikalen Fahrzeugachse z und ist entlang der Fahrzeuglängsachse x der Front des Kraftfahrzeuges zugewandt, so dass sich der Gassack beim Entfalten entlang der Fahrzeuglängsachse x ausdehnen kann.

Gemäß Figur 3 ist der Lehnenrahmen L mit samt dem Rahmenteil 1 im Querschnitt von einem Polster 9 umgeben, welches mit einem (äußeren) Bezug 10 bezogen ist. Damit der Gassack beim Aufblasen das Polster 9 durchstoßen kann, weist das Polster 9 einen entlang der vertikalen Fahrzeugachse z erstreckten Spalt 14 auf, der durch eine erste Seite 15 und eine zweite Seite 16 des Polsters 9, die jeweils entlang der vertikalen Fahrzeugachse z erstreckt sind und einander gegenüberliegen, gebildet ist. Weiterhin ist an einem den Spalt 14 zum Innenraum des Kraftfahrzeuges hin bedeckenden Bereich des Bezugs 10 ein als zweiter öffenbaren Bereich 13 bezeichneter öffenbarer Bereich des Bezugs 10 vorgesehen, durch den hindurch sich der Gassack, der sich beim Entfalten in den Spalt 14 ausdehnt, in den Innenraum des Kraftfahrzeuges entfalten kann. Dieser zweite öffenbare Bereich 13 erstreckt sich ebenfalls entlang der vertikalen Fahrzeugachse z über die gesamte Länge des Gassackpakets 4 und ist entlang der Fahrzeuglängsachse x der Front des Kraftfahrzeuges zugewandt. Vorzugsweise handelt es sich bei dem zweiten öffenbaren Bereich 13 um eine Reißnaht oder eine Perforation (Schwachstelle) des Bezuges 10.

Um beim Entfalten des Gassackes das Polster 9, und zwar die erste und die zweite Seite 15, 16 des Polsters 9 zu schützen, sind diese beiden Seiten 15, 16 mit einem ersten bzw. einem zweiten flexiblen Element 11, 12 bedeckt (z.B. aus einem Gewebe oder einem folienartigen Material), die sich jeweils flächig entlang der vertikalen Fahrzeugachse z erstrecken und jeweils vom Anlagebereich 6 abgehen und diesen mit dem Bezug 10 verbinden.

Hierbei bilden das erste und das zweite Element 11, 12 einen Schusskanal, der den ersten öffenbaren Bereich 7 des Anlagebereiches 6 mit dem zweiten öffenbaren Bereich 13 des Bezugs 10 verbindet. Der Gassack entfaltet sich somit beim Aufblasen entlang des ersten und des zweiten flexiblen Elementes 11, 12, wobei die beiden Elemente 11, 12 verhindern, dass der Gassack Material des Polsters 9 mitnimmt (z. B. durch Abrasion).

Figur 2 zeigt im Zusammenhang mit Figur 4 eine Abwandlung der in der Figur 1 bzw. 3 gezeigten Gassackanordnung, bei der im Unterschied zur Figur 1 bzw. 3 entlang der Fahrzeugquerachse y zwischen dem Rahmenteil 1 und dem Gassackpaket 4 eine Zwischenlage 8 des Spannelementes S angeordnet ist, die mit dem Anlagebereich 6 verbunden ist, so dass der Anlagebereich 6 zusammen mit der Zwischenlage 8 eine Tasche zur Aufnahme des Gassackpakets 4 bildet, die das Gassackpaket 4 im Querschnitt vollständig einschließt. Hierdurch muss mit Vorteil bei der Montage des Gassackpakets 4 an das Rahmenteil 1 das Gassackpaket 4 nicht separat positioniert und gehalten werden.

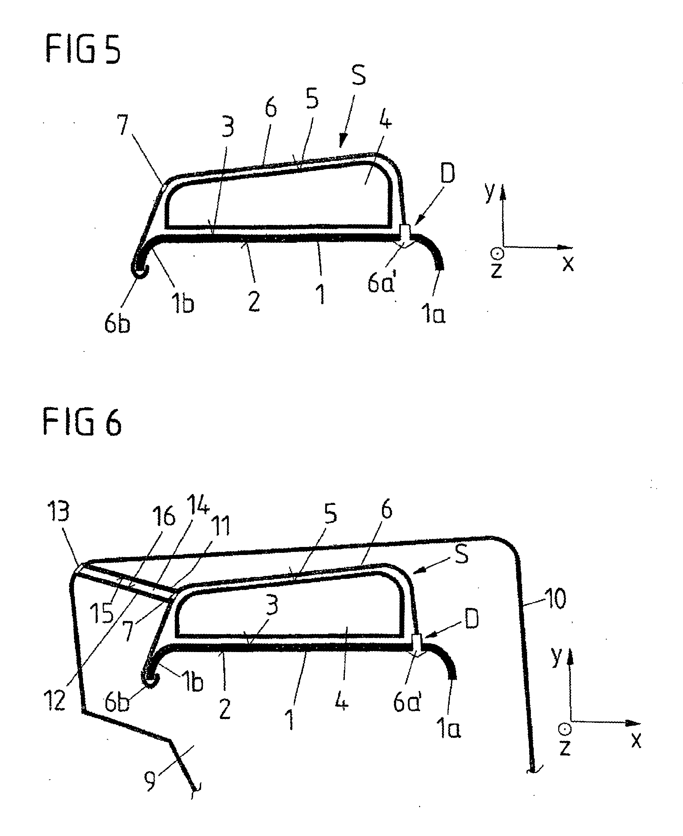

Figur 5 zeigt im Zusammenhang mit Figur 6 eine Abwandlung der in der Figur 1 bzw. 3 gezeigten Art, bei der im Unterschied zur Figur 1 bzw. 3 die beiden Endbereiche 6a, 6b des Spannelementes S unterschiedlich ausgebildet sind. Während bei der Ausführungsform gemäß der Figur 1 bzw. 3 beide Endbereiche 6a, 6b des Spannelementes S zum Einhängen in das Rahmenteil 1 im Querschnitt hakenförmig ausgebildet sind, ist bei der Ausführungsform gemäß der Figur 5 bzw. 6 eines der beiden Endbereiche des Spannelementes S als Klipselement 6a' ausgeführt.

Bei einem entsprechend langen Anlagebereich 6 (bezogen auf die vertikale Fahrzeugachse z), kann das Klipselement 6a' als Klipsleiste ausgebildet sein, die sich entlang der vertikalen Fahrzeugachse z längs des gesamten Gassackpakets 4 erstreckt, oder es können eine Mehrzahl an Klipselemente 6a' vorgesehen sein, die entlang der vertikalen Fahrzeugachse z am Anlagebereich 6 verteilt ausgebildet sind.

Sofern eines der beiden Enden des Anlagebereiches 6 als Klipselement 6a' ausgeformt ist, wird bei der Montage des Gassackpakets 4 an den Lehnenrahmen L zunächst das Gassackpaket 4 am Rahmenteil 1 befestigt, z.B. mittels vom Gassackpaket abragender Bolzen, die durch mit den Bolzen fluchtende Durchgangsöffnungen des Rahmenteils 1 geführt und von der Innenseite 2 her am Rahmenteil 1 festgelegt sind. Anschließend wird das Gassackpaket 4 mittels des Spannelementes S mit dem Rahmenteil 1 verspannt. Hierzu wird zunächst das Klipselement 6a' (oder eine Mehrzahl an Klipselementen) am ersten Randbereich 1 a festgelegt, indem es entlang der Fahrzeugquerachse y in eine am ersten Randbereich 1 a ausgebildete Durchgangsöffnung D eingeführt wird derart, dass es die Durchgangsöffnung D mit einem verbreiterten Kopf des Klipselementes 6a' hintergreift. Auf diese Weise ist das Spannelement S einseitig fest mit dem Rahmenteil 1 verbunden und kann hiernach unter Vorspannung am zweiten Randbereich 1b mittels des im Querschnitt hakenförmig ausgebildeten zweiten Endbereiches 6b am zweiten Randbereich 1b eingehängt werden, wobei der zweite Endbereich 6b den zweiten Randbereich 1b des Rahmenteils 1 gemäß Figur 1 umgreift.

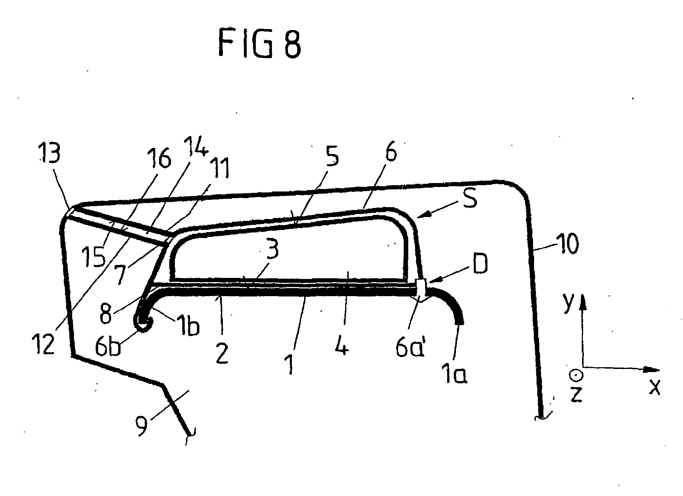

Figur 8 zeigt eine Abwandlung der in der Figur 5 bzw. 6 gezeigten Gassackanordnung, bei der im Unterschied zur Figur 5 bzw. 6 eine zusätzliche Zwischenlage 8 gemäß der Figur 4 vorgesehen ist, die entlang der Fahrzeugquerachse y zwischen dem Rahmenteil 1 und dem Gassackpaket 4 angeordnet ist, und die mit dem Anlagebereich 6 derart verbunden ist, dass der Anlagebereich 6 zusammen mit der Zwischenlage 8 eine Tasche zur Aufnahme des Gassackpakets 4 bildet, die das Gassackpaket 4 im Querschnitt vollständig umgibt.

Figur 7 zeigt eine weitere Ausführungsform der Gassackanordnung, bei der das Spannelement S die Außenseite 5 des Gassackpakets 4 nicht vollständig überdeckt. Stattdessen sind eine Mehrzahl an Spannelementen S vorgesehen, die jeweils über ihren ersten und zweiten Endbereich 6a, 6b entlang der vertikalen Fahrzeugachse z am ersten bzw. zweiten Randbereich 1 a, 1b des Rahmenteils 1 festgelegt sind. Hierbei können gemäß Figur 1 beide Endbereiche 6a, 6b hakenförmig ausgebildet sein oder gemäß Figur 5 einer der beiden Endbereiche als Klipselement 6a' ausgebildet sein.

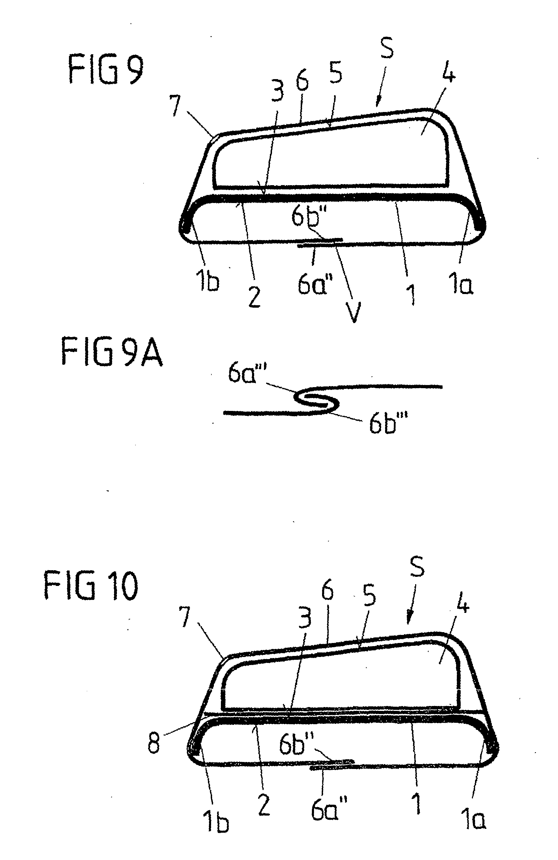

Figur 9 zeigt eine schnittbildliche, ausschnitthafte Ansicht einer Abwandlung der in der Figur 1 gezeigten Anordnung, bei der im Unterschied zur Figur 1 die beiden Endbereiche 6a" und 6b" des Spannelementes S nicht am ersten bzw. zweiten Randbereich 1 a, 1b des Spannelementes S festgelegt sind, sondern miteinander verbunden sind, so dass das Spannelement S das Gassackpaket 4 samt Rahmenteil 1 im Querschnitt umläuft, wobei das Spannelement S gegen das Gassackpaket 4 vorgespannt ist und dieses über den Anlagebereich 6 des Spannelementes S gegen das Rahmenteil 1 drückt. Gemäß Figur 9 sind die beiden Endbereiche 6a", 6b" des Spannelementes S über eine flächig ausgebildete Verbindung V aneinander befestigt. Aufgrund der Vorspannung des Spannelementes S wirken auf die Verbindung V einander entgegen gesetzte Zugkräfte. Bei der Verbindung V kann es sich um eine Klebung, eine Schweißverbindung oder eine zerstörungsfrei lösbare Verbindung (z.B. einen Klettverschluss) handeln. Aufgrund der einander entgegen gesetzten Zugkräfte eignen sich zur Ausbildung einer Verbindung zwischen den beiden Endbereichen 6a", 6b" alternativ zu der in der Figur 9 gezeigten Variante insbesondere im Querschnitt hakenförmige Endbereiche 6a"', 6b"', die ineinander eingreifen und somit die entgegen gesetzten Zugkräfte aufnehmen können (vgl. Figur 9A).

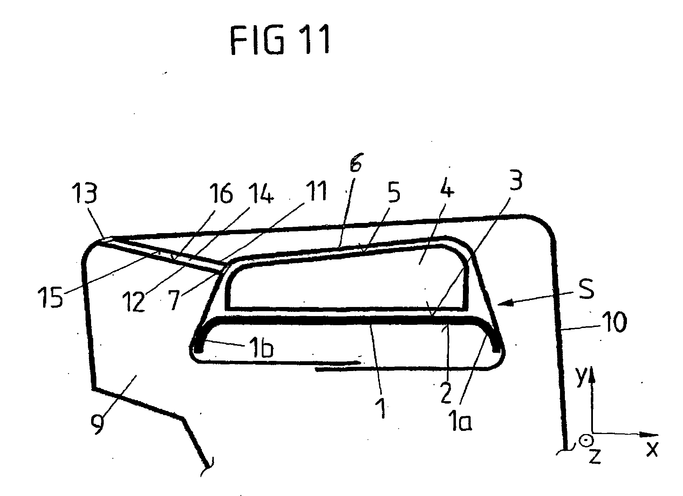

Figur 10 zeigt eine Variante der in der Figur 9 dargestellten Gassackanordnung bei der im Unterschied zur Figur 9 entlang der Fahrzeugquerachse y zwischen dem Gassackpaket 4 und dem Rahmenteil 1 eine Zwischenlage 8 gemäß der Figuren 4 und 8 angeordnet ist. Die vorstehend in den Figuren 9 und 9A beschriebenen Varianten zur Verbindung des ersten Endbereiches 6a", 6a"' mit dem zweiten Endbereich 6b", 6b"' des Spannungselementes S lassen sich natürlich auch bei den anderen Ausführungsbeispielen gemäß der Figuren 3 und 4 anwenden (vgl. Figur 11).

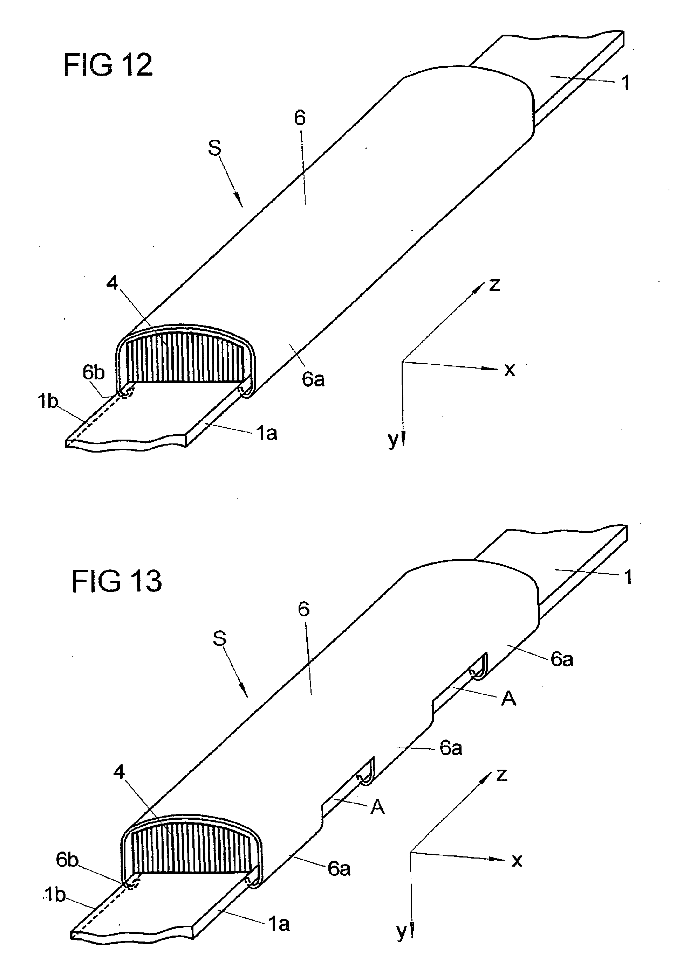

Figur 12 zeigt eine schematische, perspektivische Ansicht einer Gassackanordnung der in der Figur 1 gezeigten Art, mit einem entlang der vertikalen Fahrzeugachse z erstreckten Rahmenteil 1 und einem daran befestigten, entlang des Rahmenteils 1 längs erstreckten Gassackpaket 4. Der Anlagebereich 6 des Spannelementes S überdeckt zum flächigen Andrücken des Gassackpaketes 4 an das Rahmenteil 1 die gesamte Außenseite 5 des Gassackpaketes 4. Die Endbereiche 6a, 6b des Spannelementes S sind jeweils als im Querschnitt hakenförmige Leisten ausgeführt, die sich entlang der vertikalen Fahrzeugachse z längs des gesamten Gassackpakets 4 erstrecken und zum Festlegen sowie zum Vorspannen des Anlagebereiches 6 gegen das Gassackpaket 4 den ersten bzw. zweiten Randbereich 1 a, 1b des Rahmenteils 1 im Querschnitt umgreifen.

Figur 13 zeigt eine schematische, perspektivische Ansicht einer Weiterbildung der in der Figur 12 gezeigten Art, bei der im Unterschied zur Figur 12 die längs erstreckten, im Querschnitt hakenförmigen Leisten 6a, 6b entlang der vertikalen Fahrzeugachse z nicht durchgängig ausgebildet sind, sondern separate, entlang der vertikalen Fahrzeugachse z zueinander beabstandete Leistenabschnitte 6a, 6b bilden, die jeweils den ersten bzw. zweiten Randbereich 1 a, 1 b des Rahmenteils umgreifen, wobei der erste und der zweite Randbereich 1 a, 1b entlang der vertikalen Fahrzeugachse z nicht vollständig durch die Leistenabschnitte 6a, 6b überdeckt sind, sondern freiliegenden Abschnitte A aufweisen, an denen beispielsweise der Bezug 10 festgelegt (eingehängt) werden kann.

## Patentansprüche

1. Gassackanordnung für ein Kraftfahrzeug, mit:
- einem Rahmenteil (1), als ein Teil eines Grundkörpers eines Kraftfahrzeugsitzes, und
- einem am Rahmenteil (1) befestigten Gassackpaket (4), das zumindest einen zusammengelegten Gassack umfasst, der zum Schutz einer Person mit Gas aufblasbar ist,
**gekennzeichnet durch**
mindestens ein Spannelement (S), das dazu eingerichtet und vorgesehen ist, das Gassackpaket (4) gegen das Rahmenteil (1) zu drücken, wobei das Spannelement (S) einen ersten und einen zweiten Endbereich (6a, 6b; 6a'; 6a", 6b"; 6a"', 6b"') aufweist, mittels derer das Spannelement (S) am Rahmenteil (1) festgelegt ist, und die beiden Endbereiche (6a, 6b; 6a'; 6a", 6b"; 6a"', 6b"') über einen vorspannbaren Anlagebereich (6) des Spannelementes (S) miteinander verbunden sind, der derart gegen das Gassackpaket (4) vorgespannt ist, dass er das Gassackpaket (4) gegen das Rahmenteil (1) drückt, und wobei das Spannelement (S) eine zwischen dem Gassackpaket (4) und dem Rahmenteil (1) erstreckte Zwischenlage (8) aufweist, die zusammen mit dem Anlagebereich (6) des Spannelementes (S) das Gassackpaket (4) im Querschnitt um 360° umgreift.

2. Gassackanordnung nach Anspruch 1, **dadurch gekennzeichnet, dass** das Spannelement (S) flexibel ausgebildet ist.

3. Gassackanordnung nach Anspruch 1, **dadurch gekennzeichnet, dass** das Spannelement (S) starr ausgebildet ist.

4. Gassackanordnung nach einem der vorangegangenen Ansprüche, **dadurch gekennzeichnet, dass** das Spannelement (S) das Gassackpaket (4) im Querschnitt zumindest um 180° umgreift.

5. Gassackanordnung nach einem der vorangegangenen Ansprüche, **gekennzeichnet durch** eine dem Rahmenteil (1) abgewandte Außenseite (5) des Gassackpakets (4), wobei das Spannelement (S) die dem Rahmenteil (1) abgewandte Außenseite (5) des Gassackpakets (4) überdeckt

6. Gassackanordnung nach einem der vorangegangenen Ansprüche, **dadurch gekennzeichnet, dass** der erste und / oder der zweite Endbereich (6a, 6b; 6a') zum Festlegen des Spannelementes (S) am Rahmenteil (1) kraftschlüssig und / oder formschlüssig am Rahmenteil (1) befestigt sind.

7. Gassackanordnung nach Anspruch 1 und 6, **dadurch gekennzeichnet, dass** zumindest einer der beiden Endbereiche (6a, 6b) dazu eingerichtet und vorgesehen ist, zum Festlegen des Spannelementes (S) am Rahmenteil (1) einen der Randbereiche (1a, 1b) des Rahmenteils (1) zu umgreifen.

8. Gassackanordnung nach Anspruch 1 oder einem der Ansprüche 6 bis 7, **dadurch gekennzeichnet, dass** einer der beiden Endbereiche (6a') zum Festlegen des Spannelementes (S) am Rahmenelement (1) als Klipselement ausgebildet ist.

9. Gassackanordnung nach Anspruch 8, **dadurch gekennzeichnet, dass** der eine Endbereich (6a') dazu ausgebildet ist, eine Durchgangsöffnung (D) des Rahmenteils (1) zu hintergreifen.

10. Gassackanordnung nach einem der vorangegangenen Ansprüche, **dadurch gekennzeichnet, dass** das Rahmenteil (1) ein entlang der vertikalen Fahrzeugachse (z) erstreckter Abschnitt eines Lehnenrahmens (L) einer Lehne des Kraftfahrzeugsitzes ist.

11. Gassackanordnung nach Anspruch 1 oder einem der Ansprüche 6 bis 10, **dadurch gekennzeichnet, dass** der Anlagebereich (6) des Spannelementes (S) einen ersten öffenbaren Bereich (7) aufweist, der dazu eingerichtet und vorgesehen ist, sich zu öffnen, wenn der Gassack beim Aufblasen gegen den ersten öffenbaren Bereich (7) drückt.

12. Gassackanordnung nach einem der vorangegangenen Ansprüche, **gekennzeichnet durch** ein vom Anlagebereich (6) abgehendes flexibles erstes Element (11), welches den Anlagebereich (6) mit einem das Polster (9) umgebenden Bezug (10) des Polsters (9) verbindet, wobei das Polster das Rahmenteil (1) und das Gassackpaket (4) im Querschnitt zumindest teilweise umgibt, und wobei das erste Element (11) die erste Seite (15) des Spaltes (14) zum Schutz des Polsters (9) vor dem sich entfaltenden Gassack bedeckt.

13. Gassackanordnung nach Anspruch 12, **gekennzeichnet durch** ein vom Anlagebereich (6) abgehendes flexibles zweites Element (12), welches den Anlagebereich (6) mit dem Bezug (10) verbindet, wobei das zweite Element (12) die zweite Seite (16) des Spaltes (14) zum Schutz des Polsters (9) vor dem sich entfaltenden Gassack bedeckt.

14. Gassackanordnung nach einem der Ansprüche 12 bis 13, **dadurch gekennzeichnet, dass** der Bezug (10) einen zweiten öffenbaren Bereich (13) aufweist, der dazu eingerichtet und vorgesehen ist, sich zu öffnen, wenn der Gassack beim Aufblasen gegen den zweiten öffenbaren Bereich (13) drückt.

15. Gassackanordnung nach einem der Ansprüche 12 bis 14, **dadurch gekennzeichnet, dass** das erste Element (11) entlang des zweiten öffenbaren Bereichs (13) des Bezugs (10) mit dem Bezug (10) verbunden ist, und dass das zweite Element (12) entlang des zweiten öffenbaren Bereichs (13) des Bezugs (10) mit dem Bezug (10) verbunden ist.

## Claims

1. An airbag arrangement for a motor vehicle, comprising:
- a frame part (1), as a part of a base body of a motor vehicle seat, and
- an airbag package (4) fastened to the frame part (1) which comprises at least one folded-up airbag, which may be inflated with gas to protect an individual,
**characterized by**
at least one clamping element (S) which is designed and provided to press the airbag package (4) against the frame part (1), the clamping element (S) comprising a first and a second end region (6a, 6b; 6a'; 6a"; 6b"; 6a"'; 6b"') by means of which the clamping element (S) is secured to the frame part (1) and the two end regions (6a, 6b; 6a'; 6a"; 6b"; 6a"'; 6b"') being connected to one another via a pretensionable bearing region (6) of the clamping element (S), which is pretensioned against the airbag package (4) such that it presses the airbag package (4) against the frame part (1) and the clamping element (S) having an intermediate layer (8) extending between the airbag package (4) and the frame part (1), which together with the bearing region (6) of the clamping element (S) encompasses the airbag package (4) in cross section by 360°.

2. The airbag arrangement as claimed in claim 1, **characterized in that** the clamping element (S) is configured to be flexible.

3. The airbag arrangement as claimed in claim 1, **characterized in that** the clamping element (S) is configured to be rigid.

4. The airbag arrangement as claimed in one of the preceding claims, **characterized in that** the clamping element (S) encompasses the airbag package (4) in cross section by at least 180°.

5. The airbag arrangement as claimed in one of the preceding claims, **characterized by** an outer face (5) of the airbag package (4) remote from the frame part (1), wherein the clamping element (S) covers the outer face (5) of the airbag package (4) remote from the frame part (1).

6. The airbag arrangement as claimed in one of the preceding claims, **characterized in that** the first and/or the second end region (6a, 6b; 6a') for securing the clamping element (S) to the frame part (1) are fastened non-positively and/or positively to the frame part (1).

7. The airbag arrangement as claimed in claim 1 and 6, **characterized in that** at least one of the two end regions (6a, 6b) are designed and provided to encompass one of the edge regions (1a, 1b) of the frame part (1) for securing the clamping element (S) to the frame part (1).

8. The airbag arrangement as claimed in claim 1 or one of claims 6 to 7, **characterized in that** one of the two end regions (6a') is configured as a clip element for securing the clamping element (S) to the frame element (1).

9. The airbag arrangement as claimed in claim 8, **characterized in that** the one end region (6a') is configured to engage behind a through-opening (D) of the frame part (1).

10. The airbag arrangement as claimed in one of the preceding claims, **characterized in that** the frame part (1) is a portion of a backrest frame (L) of a backrest of the motor vehicle seat, extending along the vehicle vertical axis (z).

11. The airbag arrangement as claimed in claim 1 or one of claims 6 to 10, **characterized in that** the bearing region (6) of the clamping element (S) comprises a first openable region (7) which is designed and provided to open when the airbag presses against the first openable region (7) during inflation.

12. The airbag arrangement as claimed in one of the preceding claims, **characterized by** a flexible first element (11) branching off from the bearing region (6), which connects the bearing region (6) to a cover (10) of the cushion (9) surrounding the cushion (9), wherein the cushion (9) surrounds the frame part (1) and the airbag package (4) in cross section at least partially, and wherein the first element (11) covering the first side (15) of the gap (14) for shielding the cushion (9) from the deployed airbag.

13. The airbag arrangement as claimed in claim 12, **characterized by** a flexible second element (12) branching off from the bearing region (6) which connects the bearing region (6) to the cover (10), wherein the second element (12) is covering the second side (16) of the gap (14) for shielding the cushion (9) from the deployed airbag.

14. The airbag arrangement as claimed in one of claims 12 to 13, **characterized in that** the cover (10) has a second openable region (13), which is designed and provided to open when the airbag presses against the second openable region (13) during inflation.

15. The airbag arrangement as claimed in one of claims 12 to 14, **characterized in that** the first element (11) is connected to the cover (10) along the second openable region (13) of the cover (10), and **in that** the second element (12) is connected to the cover (10) along the second openable region (13) of the cover (10).

## Revendications

1. Agencement de coussin à gaz pour un véhicule automobile, comprenant :
- une partie formant cadre (1), en tant que partie d'un corps de base d'un siège de véhicule, et
- un paquet formant coussin à gaz (4) fixé sur la partie formant cadre (1), qui comprend au moins un coussin à gaz regroupé, qui peut être gonflé avec du gaz pour la protection d'une personne,
**caractérisé par**
au moins un élément de tensionnement (S), conçu et prévu pour pousser le paquet formant coussin à gaz (4) contre la partie formant cadre (1), dans lequel l'élément de tensionnement (S) comprend une première région terminale et une seconde région terminale (6a, 6b ; 6a'; 6a", 6b" ; 6a"', 6b"'), au moyen desquelles l'élément de tensionnement (S) est immobilisé sur la partie formant cadre (1), et les deux régions terminales (6a, 6b ; 6a'; 6a", 6b" ; 6a"', 6b"') sont reliées l'une à l'autre via une région d'application (6), susceptible d'être mise sous une tension préalable, de l'élément de tensionnement (S), qui est précontrainte contre le paquet formant coussin à gaz (4) de telle façon qu'elle pousse le paquet formant coussin à gaz (4) contre la partie formant cadre (1), et dans lequel l'élément de tensionnement (S) comprend une couche intermédiaire (8) qui s'étend entre le paquet formant coussin à gaz (4) et la partie formant cadre (1) et qui, conjointement avec la région d'application (6) de l'élément de tensionnement (S), entoure le paquet formant coussin à gaz (4) en section sur 360°.

2. Agencement de coussin à gaz selon la revendication 1, **caractérisé en ce que** l'élément de tensionnement (S) est réalisé flexible.

3. Agencement de coussin à gaz selon la revendication 1, **caractérisé en ce que** l'élément de tensionnement (S) est réalisé rigide.

4. Agencement de coussin à gaz selon l'une des revendications précédentes, **caractérisé en ce que** l'élément de tensionnement (S) entoure le paquet formant coussin à gaz (4) en section sur au moins 180°.

5. Agencement de coussin à gaz selon l'une des revendications précédentes, **caractérisé par** un côté extérieur (5) du paquet formant coussin à gaz (4), détourné de la partie formant cadre (1), dans lequel l'élément de tensionnement (S) recouvre le côté extérieur (5) du paquet formant coussin à gaz (4), détourné de la partie de cadre formant cadre (1).

6. Agencement de coussin à gaz selon l'une des revendications précédentes, **caractérisé en ce que** la première et/ou la seconde région terminale (6a, 6b ; 6a') est/sont fixée(s) en coopération de forces et/ou en coopération de formes pour immobiliser l'élément de tensionnement (S) sur la partie formant cadre (1).

7. Agencement de coussin à gaz selon la revendication 1 et 6, **caractérisé en ce qu'**au moins l'une des deux régions terminales (6a, 6b) est conçue et prévue, afin d'immobiliser l'élément de tensionnement (S) sur la partie formant cadre (1), pour entourer l'une des régions de bordure (1a, 1b) de la partie formant cadre (1).

8. Agencement de coussin à gaz selon la revendication 1 ou selon l'une des revendications 6 à 7, **caractérisé en ce que** l'une des deux régions terminales (6a') est réalisée sous forme d'élément à enclipser pour immobiliser l'élément de tensionnement (S) sur la partie formant cadre (1).

9. Agencement de coussin à gaz selon la revendication 8, **caractérisé en ce que** l'une des régions terminales (6a') est réalisée de manière à engager de l'arrière une ouverture traversante (D) de la partie formant cadre (1).

10. Agencement de coussin à gaz selon l'une des revendications précédentes, **caractérisé en ce que** la partie formant cadre (1) est un tronçon, qui s'étend le long de l'axe vertical (z) du véhicule, d'un cadre de dossier (L) d'un dossier du siège de véhicule.

11. Agencement de coussin à gaz selon la revendication 1 ou selon l'une des revendications 6 à 10, **caractérisé en ce que** la région d'application (6) de l'élément de tensionnement (S) comprend une première région à ouvrir (7), laquelle est conçue et prévue pour s'ouvrir quand le coussin à gaz pousse contre la première région à ouvrir (7) lors du gonflage.

12. Agencement de coussin à gaz selon l'une des revendications précédentes, **caractérisé par** un premier élément (11) flexible partant de la région d'application (6), qui relie la région d'application (6) avec un habillage (10) du rembourrage (9), qui entoure le rembourrage (9), dans lequel le rembourrage entoure au moins partiellement la partie formant cadre (1) et le paquet formant coussin à gaz (4) en section transversale, et dans lequel le premier élément (11) recouvre le premier côté (15) de la fente (14) pour protéger le rembourrage (9) vis-à-vis du coussin à gaz qui se déploie.

13. Agencement de coussin à gaz selon la revendication 12, **caractérisé par** un second élément (12) flexible partant de la région d'application (6), qui relie la région d'application (6) avec l'habillage (10), dans lequel le second élément (12) recouvre le second côté (16) de la fente (14) pour protéger le rembourrage (9) vis-à-vis du coussin à gaz qui se déploie.

14. Agencement de coussin à gaz selon l'une des revendications 12 à 13, **caractérisé en ce que** l'habillage (10) comprend une seconde région à ouvrir (13), laquelle est conçue et prévue pour s'ouvrir quand le coussin à gaz vient pousser contre la seconde région à ouvrir (13) lors du gonflage.

15. Agencement de coussin à gaz selon l'une des revendications 12 à 14, **caractérisé en ce que** le premier élément (11) est relié à l'habillage (10) le long de la seconde région à ouvrir (13) de l'habillage (10), et **en ce que** le second élément (12) est relié à l'habillage (10) le long de la seconde région à ouvrir (13) de l'habillage (10).
